(19) Europäisches Patentamt
European Patent Office
Office européen des brevets

(11) **EP 1 892 495 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(21) Anmeldenummer: **07004912.7**

(22) Anmeldetag: **09.03.2007**

(51) Int Cl.:
*F41J 5/02* (2006.01)   *G01B 11/00* (2006.01)
*G01S 5/16* (2006.01)   *G01V 8/10* (2006.01)

(54) **Vorrichtung und Verfahren zur elektronischen Trefferauswertung**

Device and method for electronic evaluation of hits

Dispositif et procédé destinés à l'évaluation des impacts du tir

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.03.2006 DE 102006010992**

(43) Veröffentlichungstag der Anmeldung:
**27.02.2008 Patentblatt 2008/09**

(73) Patentinhaber: **Knestel Elektronik GmbH**
**87496 Hopferbach (DE)**

(72) Erfinder:
• **Knestel, Anton**
**87496 Hopferbach (DE)**

• **Hank, Jürgen**
**86899 Landsberg (DE)**

(74) Vertreter: **MERH-IP**
**Matias Erny Reichl Hoffmann**
**Paul-Heyse-Strasse 29**
**80336 München (DE)**

(56) Entgegenhaltungen:
**EP-A- 0 121 840      WO-A- 95/07471**
**DE-A1- 1 917 138     DE-A1- 3 132 172**
**DE-A1- 3 239 794     DE-A1- 4 415 944**
**DE-A1- 19 911 375    DE-U1- 9 116 984**
**US-B1- 6 717 684**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung und ein Verfahren zur Erfassung der Position eines durch eine Auswertefläche fliegenden Gegenstands, insbesondere eines Projektils oder Pfeils, wobei die Vorrichtung und das Verfahren insbesondere für Schießstände, speziell für Sportschützen, eingesetzt werden kann.

In der DE 44 15 944 A1 ist eine elektronische Zielscheibe und ein Verfahren zu dessen Auswertung beschrieben, wobei eine Lichtquelle über eine Optik eine Mattscheibe beleuchtet. Die Optik bildet eine Schattenprojektion eines Projektils auf der Mattscheibe auf einen Zielsensor ab. Mittels einer Leitung tauscht der Zielsensor die gewonnene Information mit einer Systemsteuerung aus. In den Strahlengang der Lichtquelle sind Schlitzscheiben eingebracht.

Ein Nachteil bei diesem Verfahren besteht darin, dass durch die zusätzliche Mattscheibe bzw. Leinwand das Lichtsignal geschwächt wird, was bei den erforderlichen kurzen Belichtungszeiten einen erhöhten technischen Aufwand begründen kann. Zusätzlich muss der Abstand der Kamera zum Messfeld eingehalten werden, was eine große Bauform zur Folge hat. Darüber hinaus wird die punktförmige Lichtquelle durch die Linse aufgeweitet, was zusätzlich einen weiteren Abstand zwischen der Lichtquelle und der auswertenden Fläche mit der dazwischen angeordneten Linse erfordert.

DE 19 17 138 A1 zeigt eine photoelektronische Anordnung zur Lageerfassung sich schnell bewegender Gegenstände, bei der zwei Lichtvorhänge, bei denen ein in einer Ebene bewegter Lichtstrahl eine lückenlose Lichtfläche erzeugt, derart angeordnet sind, daß die beiden Lichtflächen in einer Ebene liegen und sich überkreuzen, und bei der innerhalb der von beiden Lichtflächen bedeckten Fläche die Durchtrittsstellen der genannten Gegenstände liegen.

DE 31 32 172 A1 betrifft eine Einrichtung zur Bestimmung der Lage des Durchstoßpunktes eines Gegenstandes beispielsweise eines abgefeuerten Geschosses. Hierzu ist ein Meßbereich so ausgebildet, daß er von zwei optischen Abbildungssystemen, welche mit Fotodetektorzeilen ausgerüstet sind, überwacht werden kann. Der Durchstoßpunkt eines Geschosses bewirkt eine Abschattung eines oder mehrerer Fotodetektoren und lässt sich somit anhand der Ausgangssignale der Fotodetektoren ermitteln. Den Abbildungssystemen sind Beleuchtungsvorrichtungen zugeordnet, welche den Meßbereich ausleuchten. Eine den Fotodetektoren nachgeschaltete Auswerteschaltung ist so ausgelegt, daß eine Verringerung des Ausgangssignales der Detektoren beim Durchfliegen des Geschosses durch den Meßbereich sensiert und ausgewertet wird.

US 6 717 684 B1 zeigt eine Vorrichtung für das Zielzählen mit einem länglichen rückreflektierenden Bauteil, zwei Lichtquellen, je einem Sensor für eine Lichtquelle und einem Prozessor. Die Lichtstrahlen der beiden Lichtquellen schneiden sich und definieren einen Zielbereich. Der Sensor der ersten Lichtquelle erzeugt ein erstes Signal, das von einer ersten Position einer ersten Störung der Ablichtung vom rückreflektierenden Bauteil abhängig ist. Der zweite Sensor erzeugt ein zweites Signal, das von einer zweiten Position einer zweiten Störung der Ablichtung vom rückreflektierenden Bauteil abhängig ist. Der Prozessor ist programmiert, um eine Position des Gegenstandes im Zielbereich festzustellen, basierend auf der ersten Position der ersten Störung der Ablichtung und der zweiten Position der zweiten Störung der Ablichtung.

EP 0 121 840 A zeigt eine Vorrichtung zur Feststellung der Lage eines Gegenstandes innerhalb eines Sichtfeldes, z.B. eines Bildschirms, bei der punktförmig Strahlungsquellen entfernt voneinander am Umfang des Sichtfeldes angeordnet sind. Weiterhin ist der Umfang des Sichtfeldes mit einer zurückreflektierenden Fläche versehen, diese reflektiert die Strahlung, die von den punktförmigen Strahlungsquellen ausgeht, zu diesen Strahlungsquellen zurück. Strahlungsempfänger sind jeweils benachbart zu den Strahlungsquellen angeordnet, so dass sie in der von der zurückreflektierenden Fläche zurückreflektierten Strahlung liegen. Ist ein Gegenstand im Sichtfeld angeordnet, dann wird dieser Gegenstand auf den Strahlungsempfängern abgebildet. Aus der Lage dieser Abbildung auf den Strahlungsempfängern können die Koordinaten des Gegenstandes innerhalb des Sichtfeldes berechnet werden.

WO 95/07471 A beschreibt ein optisches System und eine Methode für die Entdeckung des Vorhandenseins und der Position von einem mindestens stationären oder beweglichen Gegenstand in einem Feld. Das optische System hat mindestens eine Lichtquelle zum Erzeugen eines Lichtstrahls, wobei der Lichtstrahl durch mindestens eine erste reflektierende Oberfläche abgetastet wird, um eine Mehrzahl der Lichtstrahlen zu erzeugen. Die Lichtstrahlen werden über dem Feld durch mindestens eine zweite reflektierende Oberfläche überlagert und ihre Intensität wird durch mindestens ein Erfassungsmittel gemessen.

Eine Aufgabe der Erfindung ist es, eine Vorrichtung und ein Verfahren zur Erfassung der Position eines durch eine Auswertefläche fliegenden Gegenstands, insbesondere eines Projektils oder Pfeils, zu realisieren, die eine sehr kompakte Bauform und eine hohe Auswertegenauigkeit aufweisen.

Die Aufgabe wird gemäß den Merkmalen der unabhängigen Patentansprüche gelöst. Die abhängigen Patentansprüche zeigen vorteilhafte Ausführungsformen und Weiterentwicklungen der Erfindung auf.

Die erfindungsgemäße Vorrichtung und das erfindungsgemäße Verfahren kann für Schießstände, speziell für Sportschützen, angewendet werden. Das Geschoss bzw. der Pfeil kann hierbei zwei vorzugsweise orthogonal (90°) zueinander angeordnete Lichtvorhänge durchdringen. Die beiden Lichtvorhänge können in Flugrichtung des Schusses im wesentlichen übereinander bzw. überdeckend angeordnet sein, so dass keine Parallaxenfehler entstehen können. Das von beispielsweise stabförmig bzw. streifenförmig ausgebildeten Lichtquellen ausgesendete Licht kann über eine jeweilige Linse an eine jeweilige Kameraeinrichtung weitergeleitet werden, wobei die Kameraeinrichtung beispielsweise eine Zeilenkamera enthalten kann. Ein Objektiv dieser Kamera kann zusammen mit der zugehörigen Linse ein telezentrisches Objektiv bilden. Weiterhin kann der Strahlengang direkt hinter der Linse zweimal um beispielsweise 90° umgelenkt werden, so dass die Kameraeinrichtung auf derselben Seite wie die Lichtquelle angeordnet werden kann, wodurch sich eine sehr kompakte Bauform erreichen lässt.

Erfindungsgemäß weist die Vorrichtung zur optischen Erfassung der Position eines durch eine Auswertefläche fliegenden Gegenstands, insbesondere eines Projektils oder Pfeils, zumindest eine einen Lichtstreifen aussendende Lichtquelle, die Licht in eine Auswerteebene aussendet, zumindest eine Linse, durch die das von der Lichtquelle ausgesendete Licht geleitet wird, zumindest eine Kameraeinrichtung, in die das Licht nach der Linse geführt wird und/oder eine Auswerteeinrichtung auf, die ein Signal der Kameraeinrichtung auswertet und eine Position des Gegenstands ausgibt. Das erfindungsgemäße Verfahren kann über eine Auswerteeinrichtung Positionswerte ermitteln, die x-Achsenwerten und y-Achsenwerten entsprechen, woraus eine Position in x- und y-Richtung eines die Auswerteebene durchfliegenden Gegenstands ermittelt wird.

Weiterhin ist zumindest eine Umlenkeinrichtung vorgesehen, die hinter der Linse angeordnet ist und das Licht so umlenkt, dass es wieder durch die Linse geleitet wird, wobei sich das Licht nach der Linse in einer Rücksendeebene befindet. Anstatt der Verwendung von einer Linse, die zweimal durchstrahlt wird, können auch zwei Linsen verwendet werden, wobei beispielsweise das zur Umlenkeinrichtung strahlende Licht durch die eine Linse geführt wird und das von der Umlenkeinrichtung zurückgeführte Licht durch die andere Linse geführt wird.

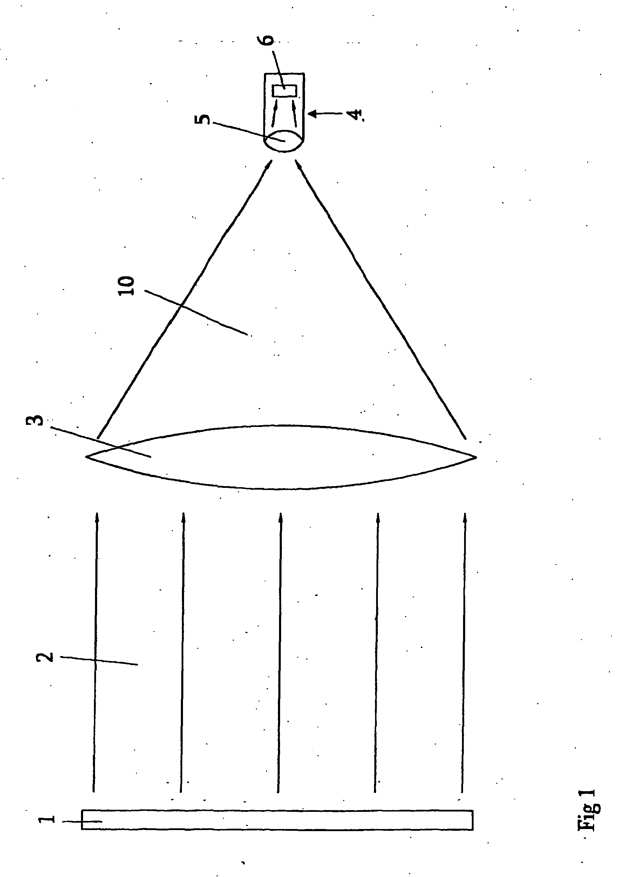

Durch das Vorsehen der Umlenkeinrichtung und das zweimalige Nutzen der Linse kann eine sehr kompakte Vorrichtung erreicht werden. Darüber hinaus können zur weiteren Erhöhung der Erfassungsgenauigkeit auch Positionswerte herangezogen werden, die beim Durchfliegen des Gegenstands der Rücksendeebene erhalten werden. Weiterhin kann anhand der Anzahl der von der Kameraeinrichtung erfassten Bilder, auf denen ein Schatten des Gegenstands erkennbar ist, auf eine Geschwindigkeit des Gegenstands geschlossen werden, wobei die Geschwindigkeit als Plausibilitätskontrolle für das erfasste Signal verwendet werden kann. Dadurch ist es möglich, die zu erfassenden, schnell fliegenden Projektile von anderen, sich eventuell durch die Erfassungseinrichtung bewegenden Körpern und Partikeln zu unterscheiden, um dadurch Fehlsignale auszufiltern. Es können jeweils zwei Lichtquellen, zwei Linsen, zwei Umlenkeinrichtungen und zwei Kameraeinrichtungen vorgesehen sein. Das von den beiden Lichtquellen ausgesendete Licht kann vorzugsweise in einem Winkel von im wesentlichen 90° zueinander angeordnet sein. Das von den Lichtquellen ausgesendete Licht kann die Auswerteebene gleichförmig mit homogenem Licht durchsetzen und trifft auf der anderen Seite auf eine jeweilige Linse. Von der jeweiligen Linse trifft das Licht auf die jeweilige Umlenkeinrichtung, die das Licht dann wiederum durch die jeweilige Linse zurück in der Rücksendeebene auf die jeweilige Kameraeinrichtung reflektiert. Die Linsen und die Objekte der Kameraeinrichtung sind derart ausgelegt, dass eine telezentrische Linse erhalten wird, d. h., dass der Öffnungswinkel der Objektive durch die Linsen so korrigiert wird, dass sich ein paralleler Strahlengang ergibt. Dies gilt für die x- und die y- bzw. für die horizontale und die vertikale Richtung (siehe Fig. 1).

Das von den beiden Lichtquellen ausgesendete Licht kann sich vorzugsweise in der Auswerteebene und/oder in der Rücksendeebene überdecken. Es ist jedoch auch möglich, dass das Licht der beiden Lichtquellen in unterschiedlichen Ebenen ausgesendet wird. Das Gleiche gilt für das Licht in der Rücksendebene, welches auch in unterschiedliche Ebenen zurückgesendet werden kann. Der Abstand dieser jeweiligen unterschiedlichen Ebenen sollte jedoch nur gering sein, um die Auswertegenauigkeit nicht zu stark zu vermindern.

Der im vorgenannten Stand der Technik geschilderte Nachteil der großen Baugröße resultiert daraus, dass je nach Objektiv-Brennweite der Abstand der Kamera zur Sammellinse in etwa gleich groß wie das auszuwertende Schussfeld sein muss, d. h., die komplette Apparatur würde zumindest die vierfache Fläche des auszuwertenden Schussfeldes aufweisen. Erfindungsgemäß kann dieser Nachteil dadurch eliminiert werden, dass das Licht hinter der Sammellinse durch beispielsweise zwei Spiegel umgelenkt wird. Durch diese Spiegel in der Umlenkeinrichtung entstehen zwei Lichtvorhänge, ein paralleler, telezentrischer Lichtvorhang und ein nichttelezentrischer Lichtvorhang. Die dem Schützen zugewandte Seite weist den telezentrischen Bereich auf. Der zweimal umgelenkte Strahlengang in der Rücksendeebene kann einen Winkel aufweisen, der dem Öffnungswinkel des Objektivs der Kameraeinrichtung entspricht.

Der Abstand des telezentrischen und des nichttelezentrischen Lichtvorhangs sollte hierbei mindestens so groß sein, dass das Projektil nicht während einer Integrationszeit eines Sensors der Auswerteeinrichtung durch beide Lichtvorhänge fliegt, d. h., dass das durchfliegende Projektil (der sich bewegende Gegenstand) auf dem Kamera-Chip zweimal hintereinander einen Schatten erzeugt, wobei nur der erste (telezentrische) Lichtvorhang in der Auswerteebene von vorrangiger Bedeutung ist. Wie voranstehend schon kurz erläutert, kann auch der zweite Lichtvorhang zur Erhöhung der Messgenauigkeit verwendet werden. Dies ist jedoch nur dann möglich, wenn sich das Projektil im Zentrumsbereich der Vorrichtung befindet.

Es ist weiterhin vorteilhaft, den Strahlengang zweimal durch die entsprechende Linse zu leiten. Dadurch kann die nötige Brennweite der Linse verdoppelt werden, d. h., die Linsendicke kann annähernd halbiert werden.

Weiterhin kann die Sammellinse als Fresnel-Linse ausgebildet werden. Die voranstehend erwähnten Umlenkspiegel können weiterhin durch ein 90°-Prisma mit Totalreflektion ersetzt werden.

Gemäß einer weiteren Möglichkeit können die beiden Umlenkspiegel konkav ausgeformt werden, um damit den telezentrischen Effekt des Objektivs zu erreichen.

Um das von der Lichtquelle zur Linse abgestrahlte Licht möglichst homogen zu gestalten, kann zusätzlich ein Streulichtmittel vorgesehen sein. Dieses Streulichtmittel kann im Strahlengang nach einem transparenten Stab vorgesehen sein, in den Stab integriert werden, und/oder durch den Stab realisiert werden. Der Stab kann im Strahlengang nach lichterzeugenden Elementen, beispielsweise Leuchtdioden, vorgesehen sein. Die Lichtquelle kann die lichterzeugenden Elemente, den Stab und/oder die bzw. das Streulichtmittel enthalten.

Die Erfindung wird nun anhand von beispielhaften und schematischen Figuren näher erläutert.

Es zeigen

Fig. 1 eine schematische Ansicht einzelner Komponenten der Erfindung mit einer Sammellinse,
Fig. 2 eine schematische Ansicht der Erfindung mit einer Fresnel-Linse,
Fig. 3 und 3a schematische Ansichten der Erfindung mit zwei Strahlengängen, und
Fig. 4 ein schematischer Schnitt durch die erfindungsgemäße Vorrichtung in einer Richtung (x- oder y-Richtung).

In der Fig. 1 ist eine vorzugsweise lineare bzw. stabförmige Lichtquelle 1 dargestellt, die ihr Licht in Richtung der Linse abstrahlt. Die Lichtquelle 1 kann derart ausgebildet sein, dass das Licht als Lichtstreifen abgestrahlt wird. Das Licht 2 wird von einer Sammellinse 3 oder einem Parabolspiegel 23, 24 im Winkel derart verändert, dass ein Strahlengang 10 erhalten wird, der mit einem Öffnungswinkel eines Objektivs 5 einer Kameraeinrichtung 4 übereinstimmt. Das Objektiv 5 fokussiert das einfallende Licht auf einen positionssensitiven Lichtempfindlichkeitsbereich eines vorzugsweise Halbleiter-Bauelements bzw. Sensors 6, wie beispielsweise eines CCD- oder C-MOS-Zeilensensors. In der Fig. 1 ist schematisch lediglich ein Strahlengang in eine Richtung dargestellt (x- oder y-Richtung der Erfassungsvorrichtung).

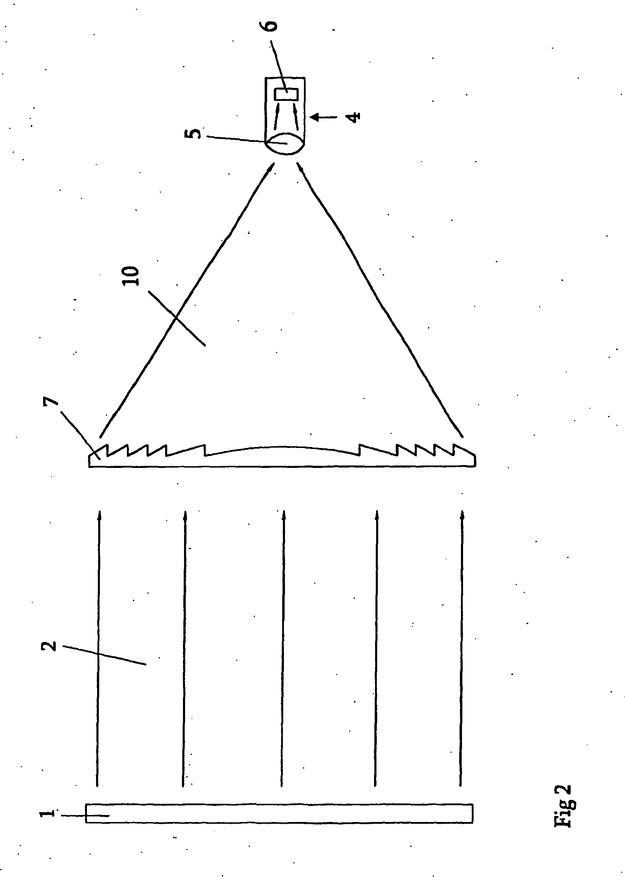

In der Fig. 2 ist im Unterschied zur Fig. 1 anstatt der Sammellinse 3 eine Fresnel-Linse 7 dargestellt.

Die Sammellinse 3 und/oder die Fresnel-Linse 7 bilden zusammen mit der Kameraeinrichtung 4 ein telezentrisches Objektiv, das auf der jeweiligen linken Seite der Linse 3, 7 einen parallelen Strahlengang und auf der rechten Seite einen dreieckigen Strahlengang aufweist.

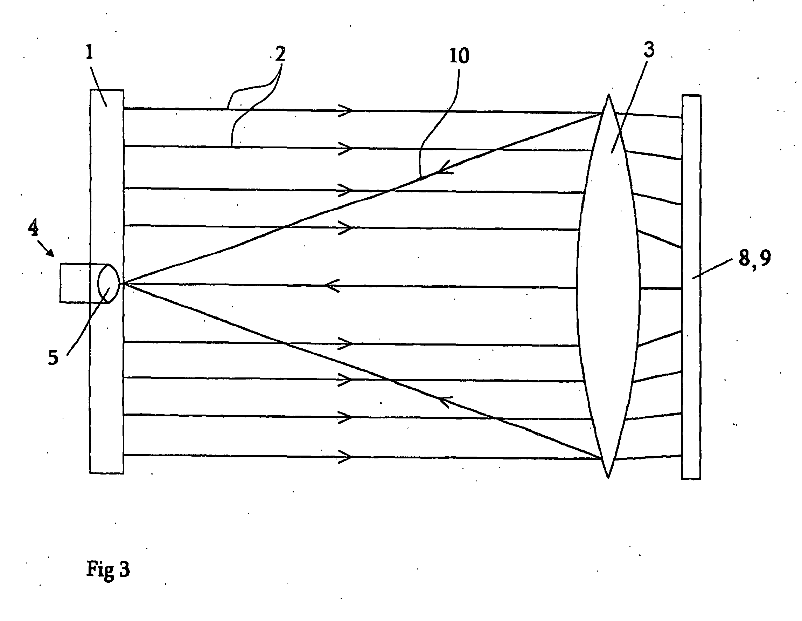

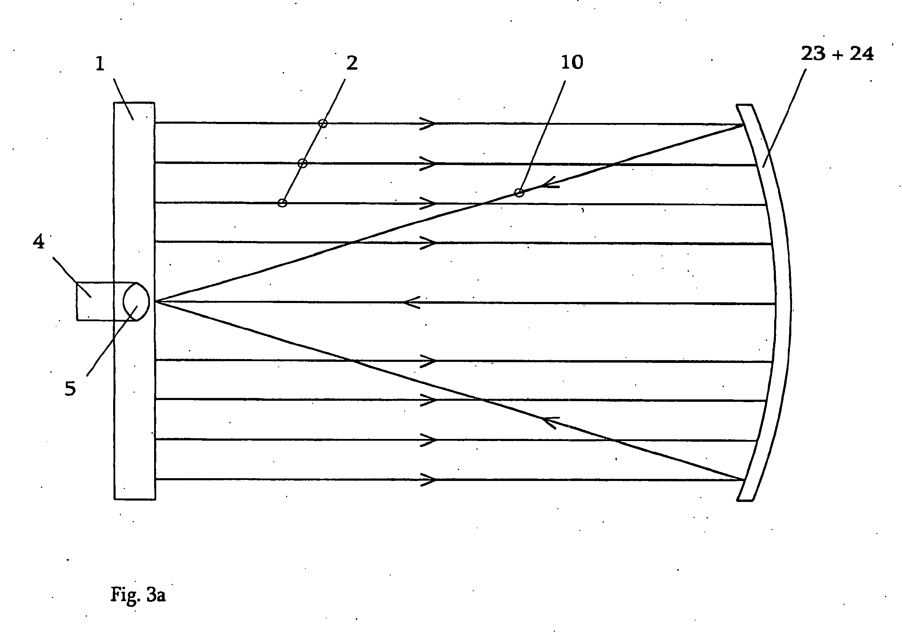

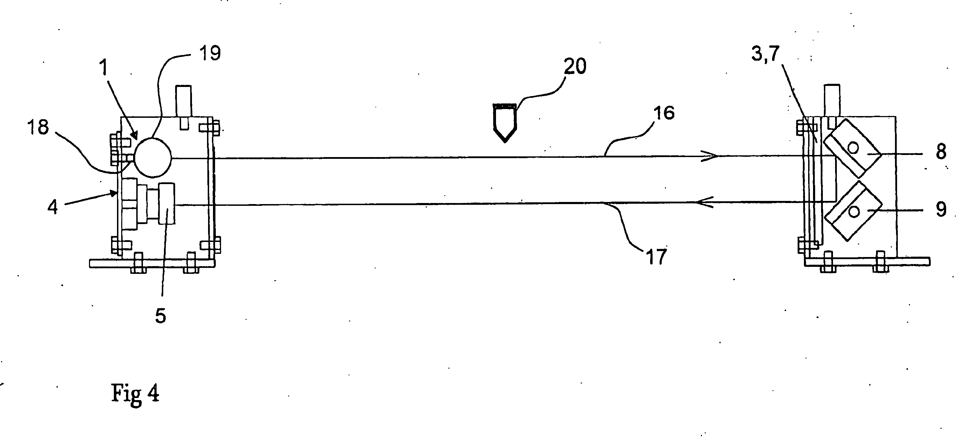

In der Fig. 3 ist zur Platzoptimierung eine vorteilhafte Ausgestaltung der Erfindung dargestellt. Zur Platzoptimierung wird der Strahlengang hinter der Linse 3 über beispielsweise zwei Spiegel 8, 9 der Umlenkeinrichtung umgelenkt und entgegen dem parallelen Lichtvorhang (Primärlichtvorhang) in Richtung Lichtquelle 1 zurückreflektiert. Der zurückreflektierte Lichtvorhang 10 befindet sich in einem vorbestimmten Abstand zum Primärlichtvorhang 2. Der Primärlichtvorhang 2 befindet sich in einer Auswerteebene 16 und der zurückreflektierte Lichtvorhang 10 befindet sich in einer Rücksendeebene (siehe Fig. 4).

In der Fig. 4 ist der prinzipielle Aufbau einer erfindungsgemäßen . Erfassungs- bzw. Abtasteinheit in einer Richtung (x- oder y-Richtung) dargestellt. Über beispielsweise Leuchtdioden 18, die in einer Reihe angeordnet sein können, wird Licht ausgesendet. Dieses Licht trifft auf einen zumindest teilweise transparenten, vorzugsweise rotationssymmetrisch ausgebildeten Stab 19, der das Licht in Richtung Linse fokussiert. Der Stab kann beispielsweise aus Glas bestehen.

Um das zur Linse abgestrahlte Licht möglichst homogen zu gestalten, kann zusätzlich ein Streulichtmittel vorgesehen sein. Dieses Streulichtmittel kann im Strahlengang nach dem Stab 19 vorgesehen sein oder in den Stab 19 integriert werden, und/oder durch den Stab 19 realisiert werden. Das Streulichtmittel kann aus milchigem, transparentem Material bestehen. Die vorstehend erläuterten Merkmale der Lichtquelle sind für alle geschilderten Ausführungsformen anwendbar, insbesondere auch für Realisierungen der Erfindung ohne Umlenkeinrichtung.

Der Stab 19 sendet den Strahlengang 2 in der Auswerteebene 16 zu der Sammellinse 7. Von der Sammellinse 7 verläuft das Licht zu der Umlenkeinrichtung 8, 9, die aus einem Spiegel 8 und einem Spiegel 9 besteht. An dieser Stelle sei angemerkt, dass anstatt der Sammellinse 3 auch eine Fresnel-Linse 7 vorgesehen sein kann. Hinter der entsprechenden Linse 3, 7 befindet sich der um 45° geneigte Spiegel 8, der das einfallende Licht auf einen zweiten Spiegel 9 umlenkt. Dieser Spiegel ist ebenfalls um 45° geneigt. Durch die beiden Spiegel 8, 9 der Umlenkeinrichtung wird das Licht in eine Rücksendeebene 17 geleitet, die zur Auswerteebene 16 parallel sein kann. Der umgelenkte Lichtvorhang in der Rücksendeebene 17 hat von dem ersten parallelen Lichtvorhang 2 in der Auswerteebene 16 einen derartigen Abstand, dass während der Belichtungszeit der Kameraeinrichtung 4 ein Projektil 20 nur den ersten Lichtvorhang 2 durchschreitet und den zweiten Lichtvorhang 10 noch nicht erreicht hat. Vorzugsweise liegen die Abstände der beiden Lichtvorhänge 2, 10 bzw. der Auswerteebene 16 und der Rücksendeebene 17 zwischen 10 und 30 mm. Belichtungszeiten können beispielsweise bei 60.000 Bilder/s liegen.

Wenn das Projektil 20 die Auswerteebene 16 durchschreitet, kann die Kameraeinrichtung 4 einen entsprechenden Schatten erfassen. Dieser Schatten kann dann von einer Auswerteeinrichtung erfasst werden. Da die in der Fig. 4 dargestellte Anordnung sowohl in x-Richtung als auch in y-Richtung vorgesehen ist, wird eine genaue Positionserfassung des Projektils 20 bzw. des sich bewegenden Gegenstands möglich.

Die optischen Elemente der erfindungsgemäßen Vorrichtung können in einer x- und y-Richtung bzw. in einer vertikalen und horizontalen Richtung angeordnet sein. Die erste Lichtquelle 1 und eine zweite Lichtquelle senden ihr Licht in x- bzw. y-Richtung aus. Diese parallelen Strahlengänge treffen auf der anderen Seite einer aktiven Auswertefläche auf entsprechende Sammellinsen 3. Anstatt der dargestellten Sammellinsen 3 können auch Fresnel-Linsen 7 verwendet werden. Die aktive Auswertefläche befindet sich in dem Schnittbereich der Strahlengänge 2.

Das Licht wird durch die Spiegel 8, 9 der Umlenkeinrichtung zurückreflektiert und in Richtung der jeweiligen Lichtquelle 1 zurückgeleitet. Die Zurückleitung des Lichts erfolgt allerdings in einer von der Auswerteebene 16 unterschiedlichen Rücksendeebene 17. Die vorgesehenen Linsen 3 bzw. 7 sind derart ausgebildet, dass der Lichtpfad die entsprechende Linse zweimal passiert. Dadurch ist die nötige Brennweite der entsprechenden Linse doppelt so groß, d. h., die Linse kann in etwa halb so dick ausgebildet werden. Das von den vorgenannten Linsen in Richtung der Kameraeinrichtung 4 zurückreflektierte Licht 10 ist in Schussrichtung gesehen hinter dem parallel verlaufenden (telezentrischen) Lichtfeld angeordnet. Das Geschoss bzw. der sich bewegende Gegenstand durchdringt den zurücklaufenden Lichtvorhang 10 erst nachdem die Auswertung der Trefferlage durchgeführt ist.

Ausdrücklich sei an dieser Stelle erwähnt, dass anstatt der vorgenannten Objektive bzw. Fresnel-Linsen und Spiegel die Verwendung von Parabolspiegeln möglich ist. Diese Möglichkeit ist in der Figur. 3a dargestellt. Hierbei sind zwei Parabolspiegel 23, 24 vorgesehen, die ebenfalls zweimal 45° zueinander ausgerichtet sein können, so dass auch hier der zweite Lichtvorhang in der Rücksendeebene 17 hinter dem ersten Primärlichtvorhang 2 zurückgespiegelt wird. Würden in der Fig. 4 die beiden Spiegel 8, 9 parabolisch ausgeführt sein, könnte die Sammellinse 3, 7 entfallen, wie in der Fig. 3a dargestellt. Die Radien der Konkav-Spiegel (Hohlspiegel) können nach der folgenden Formel ermittelt werden:

$$f = r/2$$

f steht für die Brennweite des Lichts und r für den Radius des Spiegels.

Ein die Primärlichtvorhänge 2 durchfliegendes Projektil 20 ergibt eine x- und y-Position bei den entsprechenden Kameraeinrichtungen 4 , da bei beiden Kameraeinrichtungen 4 ein jeweiliger Schatten erfasst wird. Dieser Schatten kann entsprechend ausgewertet werden, um entsprechende Positionssignale auszugeben.

Ein Beispiel für eine elektrische Steuerung der erfindungsgemäßen Vorrichtung weist eine Auswerteeinrichtung bzw. einen Controller auf der über zwei entsprechende Ausgänge eine Lichtstärke der linearen Lichtquellen 1 einstellt. Weiterhin werden Sensoren 6 vom Controller eingelesen. Diese Sensoren 6 sind vorzugsweise Zeilensensoren. Vom Controller werden weiterhin Pixel- und Zeilenclocksignale generiert. Die Lichtquellen 1 werden durch die von den Zeilensensoren 6 zurück gelieferten Signale gesteuert, so dass geschlossene Regelkreise entstehen. Die beiden Sensoren 6 werden durch die optische Anordnung gleichmäßig ausgeleuchtet. Fliegt nun beispielsweise ein Projektil 20 durch die beiden Lichtvorhänge 2 , werden entsprechende Sektoren auf den Sensoren 6 abgedunkelt. Die vom Controller so errechneten x- und y-Werte werden über ein Netzwerk beispielsweise an eine Visualisierung, die beim Schützen angeordnet sein kann, weitergeleitet. Weiterhin können die Signale direkt mit einem zentralen Rechner empfangen werden, so dass beispielsweise ein Wettbewerb online ausgewertet werden kann. Eine Datenübertragung kann vorteilhaft durch ein BUS-System oder ein Funknetzwerk erfolgen. Zusätzlich kann eine Codiereinrichtung vorgesehen sein, die die Zugehörigkeit eines Datensatzes zu einem bestimmten Schießstand erlaubt, wenn mehrere entsprechende Vorrichtungen vorgesehen sind.

Die vorgenannten Merkmale und Ausführungsformen können in beliebiger Weise miteinander kombiniert werden.

**Patentansprüche**

1. Vorrichtung zur Erfassung der Position eines eine Auswertefläche durchfliegenden Gegenstands (20), insbesondere eines Projektils oder Pfeils, mit zumindest einer einen Lichtstreifen aussendenden Lichtquelle (1), die Licht in einer Auswerteebene (16) aussendet, und mit zumindest einer Umlenkeinheit, die das in der Auswerteebene (16) ausgesendete Licht so umlenkt, dass es sich nach der Umlenkung in einer Rücksendeebene (17) befindet, wobei zumindest einer Kameraeinrichtung (4) das Licht aus der Rücksendeebene (17) zugeführt wird und einer Auswerteeinrichtung, die ein Signal der Kameraeinrichtung (4) auswertet und eine Position des Gegenstands (20) ausgibt, **dadurch gekennzeichnet, dass** sich die Rücksendeebene (17) in einem vorbestimmten Abstand zur Auswerteebene (16) befindet.

2. Vorrichtung nach Anspruch 1, **dadurch gekennzeichnet, dass** die Umlenkeinheit aus zumindest einem, vorzugsweise zwei Parabolspiegeln (23, 24) gebildet ist, deren Radius bevorzugt f= r/2 ist, wobei f für die Brennweite des Lichts und r für den Radius des Parabolspiegels (23, 24) steht.

**3.** Vorrichtung nach Anspruch 1 oder 2, **dadurch gekennzeichnet, dass** die zwei Parabolspiegel (23, 24) derart zueinander ausgerichtet sind, dass das Licht in der Rücksendeebene (17) parallel zum Licht in der Auswertebene (16) verläuft und versetzt um den Abstand der Ebenen (16, 17) um im wesentlichen 180° umgelenkt wird.

**4.** Vorrichtung nach Anspruch 1, **dadurch gekennzeichnet, dass** zumindest eine Linse (3, 7) vorgesehen ist, durch die das von der Lichtquelle (1) ausgesendete Licht geleitet wird und die Umlenkeinheit aus zumindest einer Umlenkeinrichtung (8, 9) gebildet ist, die hinter der Linse (3, 7) angeordnet ist und das Licht so umlenkt, dass es wieder durch die Linse (3, 7) geleitet wird,
wobei sich das Licht nach der Linse (3, 7) in der Rücksendeebene (17) befindet.

**5.** Vorrichtung nach Anspruch 1 bis 4, **dadurch gekennzeichnet, dass** eine erste Lichtquelle (1) und eine zweite Lichtquelle vorgesehen sind, wobei die Lichtquellen (1) das Licht im wesentlichen orthogonal zueinander in der Auswerteebene (16) aussenden.

**6.** Vorrichtung nach zumindest einem der Ansprüche 1 bis 5, **dadurch gekennzeichnet, dass** eine erste und eine zweite Linse (3, 7) vorgesehen sind, wobei das Licht der ersten Lichtquelle (1) auf die erste Linse (3, 7) und das Licht der zweiten Lichtquelle auf die zweite Linse (7) trifft.

**7.** Vorrichtung nach zumindest einem der Ansprüche 1 bis 6, **dadurch gekennzeichnet, dass** das Licht nach der ersten Linse (3) auf eine erste Umlenkeinrichtung (8, 9) trifft und das Licht nach der zweiten Linse auf eine zweite Umlenkeinrichtung trifft.

**8.** Vorrichtung nach zumindest einem der Ansprüche 1 bis 5, **dadurch gekennzeichnet, dass** ein erster und ein zweiter Parabolspiegel (23, 24) vorgesehen sind, wobei das Licht der ersten Lichtquelle (1) auf den ersten Parabolspiegel (23) und das Licht der zweiten Lichtquelle auf den zweiten Parabolspiegel (24) trifft.

**9.** Vorrichtung nach zumindest einem der Ansprüche 1 bis 5, **dadurch gekennzeichnet, dass** das Licht nach der ersten Umlenkeinrichtung (8, 9) durch die erste Linse (3, 7) geleitet wird und das Licht nach der zweiten Umlenkeinrichtung durch die zweite Linse (7) geleitet wird.

**10.** Vorrichtung nach zumindest einem der Ansprüche 1 bis 5, **dadurch gekennzeichnet, dass** das Licht nach einer ersten Umlenkeinheit zu einer ersten Kameraeinrichtung (4) geleitet wird und das Licht nach einer zweiten Umlenkeinheit zu einer zweiten Kameraeinrichtung geleitet wird.

**11.** Vorrichtung nach zumindest einem der Ansprüche 6 bis 9, **dadurch gekennzeichnet, dass** das Licht nach der ersten Umlenkeinrichtung (8,9) und nach dem Durchdringen der ersten Linse (3, 7) zu einer ersten Kameraeinrichtung (4) geleitet wird und das Licht nach der zweiten Umlenkeinrichtung und nach dem Durchdringen der zweiten Linse (7) zu einer zweiten Kameraeinrichtung geleitet wird.

**12.** Vorrichtung nach zumindest einem der Ansprüche 1 bis 11, **dadurch gekennzeichnet, dass** sich das zu der ersten und zu der zweiten Kameraeinrichtung (4) geleitete Licht in der Rücksendeebene (17) befindet.

**13.** Vorrichtung nach zumindest einem der Ansprüche 6 oder 12, **dadurch gekennzeichnet, dass** das Licht in der Auswerteebene (16) einen parallelen Strahlengang aufweist.

**14.** Vorrichtung nach zumindest einem der Ansprüche 1 bis 13,
**dadurch gekennzeichnet, dass** zumindest die erste oder die zweite Lichtquelle (1) aus einer Vielzahl von Leuchtdioden (18) gebildet werden.

**15.** Vorrichtung nach zumindest einem der Ansprüche 1 bis 14,
**dadurch gekennzeichnet, dass** die erste und die zweite Lichtquelle (1) ein Streulichtmittel enthält, das das Licht durch Streuung verteilt und ein homogenes Lichtband in der Auswerteebene (16) erzeugt.

**16.** Vorrichtung nach Anspruch 15, **dadurch gekennzeichnet, dass** das Streulichtmittel aus Milchglas besteht und in einem transparenten Stab (19) integriert ist oder im Strahlengang nach dem Stab (19) vorgesehen ist.

**17.** Vorrichtung nach zumindest einem der Ansprüche 1 bis 16,
**dadurch gekennzeichnet, dass** zumindest die erste oder die zweite Lichtquelle (1) IR-Licht aussendet.

**18.** Vorrichtung nach zumindest einem der Ansprüche 6 oder 7,
**dadurch gekennzeichnet, dass** zumindest die erste oder die zweite Linse (3, 7) als Zylinderlinse (3) und/oder als Fresnel-Linse (7) ausgebildet ist.

19. Vorrichtung nach zumindest einem der Ansprüche 1 bis 18,
**dadurch gekennzeichnet, dass**
zumindest die erste oder die zweite Umlenkeinheit eine Spiegeleinrichtung ist, die das empfangene Licht parallel zur Auswerteebene (16) in Richtung zur jeweiligen Kameraeinrichtung (4) in der Rücksendeebene (17) zurücksendet.

20. Vorrichtung nach zumindest einem der Ansprüche 6 bis 19,
**dadurch gekennzeichnet, dass**
anstatt der Linsen Parabolreflektoren und/oder konkav ausgebildete Reflektoren vorgesehen sind.

21. Vorrichtung nach zumindest einem der Ansprüche 1 bis 20, **dadurch gekennzeichnet, dass**
zumindest die erste oder die zweite Umlenkeinrichtung (8, 9) als Prisma ausgebildet ist.

22. Vorrichtung nach zumindest einem der Ansprüche 1 bis 21, **dadurch gekennzeichnet, dass**
zumindest die erste oder die zweite Kameraeinrichtung (4) als Zeilenkamera ausgebildet ist und zusammen mit zumindest der ersten oder der zweiten Linse (3, 7) ein telezentrisches Objektiv bildet.

23. Vorrichtung nach zumindest einem der Ansprüche 1 bis 22, **dadurch gekennzeichnet, dass** zumindest die erste oder die zweite Umlenkeinheit das Licht zwei Mal um 90° umlenkt.

24. Vorrichtung nach zumindest einem der Ansprüche 1 bis 23,
**dadurch gekennzeichnet, dass**
das Licht in der Rücksendeebene (17) durch die jeweilige Umlenkeinheit einen Winkel aufweist, der einem Öffnungswinkel eines jeweiligen Objektivs (5) der zumindest ersten oder zweiten Kameraeinrichtung (4) entspricht.

25. Vorrichtung nach zumindest einem der Ansprüche 1 bis 24,
**dadurch gekennzeichnet, dass**
der Abstand zwischen der telezentrischen Auswerteebene (16) und der nichttelezentrischen Rücksendeebene (17) mindestens so groß ist, dass der beide Ebenen (16, 17) durchfliegende Gegenstand während einer Integrationszeit eines Sensors (6) der Kameraeinrichtung (4) nur eine der beiden Ebenen (16, 17) durchfliegt.

26. Verfahren zur Erfassung der Position eines sich bewegenden Gegenstands (20), insbesondere eines Projektils oder Pfeils, mit einer Vorrichtung nach zumindest einem der Ansprüche 1 bis 25, wobei die Auswerteeinrichtung von der ersten und der zweiten Kameraeinrichtung (4) Positionswerte erhält, die x-Achsenwerten und y-Achsenwerten entsprechen und daraus eine Position in x- und y-Richtung des die Auswerteebene (16) durchfliegenden Gegenstands (20) ermittelt und zur Plausibilitätskontrolle der ermittelten Position bzw. zur Erhöhung der Erfassungsgenauigkeit auch Positionswerte herangezogen werden, die beim Durchfliegen des Gegenstands der Rücksendeebene (17) erhalten werden.

27. Verfahren nach Anspruch 26, **dadurch gekennzeichnet, dass** die ermittelten Positionswerte an einer Visualisierungseinrichtung angezeigt werden.

28. Verfahren nach Anspruch 26 oder 27, **dadurch gekennzeichnet, dass**
die ermittelten Positionswerte über eine Codiereinrichtung mit Informationen gekoppelt werden, die eine Zuordnung der Positionswerte zu einer entsprechenden Vorrichtung an einem Schießstand erlauben, wenn mehrere Schießstände vorgesehen sind.

29. Verfahren nach zumindest einem der Ansprüche 26 bis 28,
**dadurch gekennzeichnet, dass**
anhand der Anzahl der von der Kameraeinrichtung (4) erfassten Bilder, auf denen ein Schatten des Gegenstands (20) erkennbar ist, auf eine Geschwindigkeit des Gegenstands (20) geschlossen wird, wobei die Geschwindigkeit als Plausibilitätskontrolle für das erfasste Signal verwendet wird.

**Claims**

1. A device for detecting the position of an object (20) flying through an evaluation surface, in particular of a projectile or an arrow, comprising
at least one light source (1) that emits a light strip and emits light into an evaluation plane, and comprising at least one deflection unit deflecting the light emitted into the evaluation plane (16) such that after the deflection it is in a return plane (17), the light from the return plane (17) being supplied to at least one camera device (4), and
an evaluation device evaluating a signal of the camera device (4) and outputting a position of the object (20),
**characterized in that** the return plane (17) is at a predetermined distance to the evaluation plane (16).

2. The device according to claim 1, **characterized in that**
the deflection unit is constituted by at least one, preferably two parabolic mirrors (23, 24), the radius of which is preferably f = r/2, wherein f is the focal length of the light and r is the radius of the parabolic mirror (23, 24).

3. The device according to claim 1 or 2, **characterized in that**
the two parabolic mirrors (23, 24) are aligned relative to one another such that the light in the return plane (17) runs parallel to the light in the evaluation plane (16) and is deflected by substantially 180° in a manner offset by the distance of the planes (16, 17).

4. The device according to claim 1, **characterized in that**
at least one lens (3, 7) is provided through which the light emitted from the light source (1) is directed, and the deflection unit is constituted by at least one deflection device (8, 9) disposed behind the lens (3, 7) and deflecting the light such that it is again directed through the lens (3, 7),
wherein the light after the lens (3, 7) is in the return plane (17).

5. The device according to claims 1 to 4, **characterized in that** a first light source (1) and a second light source are provided, the light sources (1) emitting the light substantially orthogonally to one another in the evaluation plane (16).

6. The device according to at least one of claims 1 to 5, **characterized in that** a first and a second lens (3, 7) are provided, the light of the first light source (1) hitting the first lens (3, 7) and the light of the second light source hitting the second lens (7).

7. The device according to at least one of claims 1 to 6, **characterized in that** the light after the first lens (3) hits a first deflection device (8, 9) and the light after the second lens hits a second deflection device.

8. The device according to at least one of claims 1 to 5, **characterized in that** a first and a second parabolic mirror (23, 24) are provided, the light of the first light source (1) hitting the first parabolic mirror (23) and the light of the second light source hitting the second parabolic mirror (24).

9. The device according to at least one of claims 1 to 5, **characterized in that** the light after the first deflection device (8, 9) is directed through the first lens (3, 7) and the light after the second deflection device is directed through the second lens (7).

10. The device according to at least one of claims 1 to 5, **characterized in that** the light after a first deflection unit is directed to a first camera device (4) and the light after a second deflection unit is directed to a second camera device.

11. The device according to at least one of claims 6 to 9, **characterized in that** the light after the first deflection device (8, 9) and after penetrating the first lens (3, 7) is directed to a first camera device (4) and the light after the second deflection device and after penetrating the second lens (7) is directed to a second camera device.

12. The device according to at least one of claims 1 to 11, **characterized in that** the light directed to the first and the second camera devices (4) is in the return plane (17).

13. The device according to at least one of claims 6 or 12, **characterized in that**
the light in the evaluation plane (16) has a parallel beam path.

14. The device according to at least one of claims 1 to 13, **characterized in that**
at least the first or the second light source (1) are constituted by a plurality of light emitting diodes (18).

15. The device according to at least one of claims 1 to 14, **characterized in that**
the first and the second light source (1) contains stray light means distributing the light by scattering and generating a homogeneous light band in the evaluation plane (16).

16. The device according to claim 15, **characterized in that**
the stray light means consists of milk glass and is incorporated in a transparent rod (19) or is provided behind the rod (19) in the beam path.

17. The device according to at least one of claims 1 to 16, **characterized in that**
at least the first or the second light source (1) emits IR light.

18. The device according to at least one of claims 6 or 7, **characterized in that**
at least the first or the second lens (3, 7) is formed as a cylinder lens (3) and/or a Fresnel lens (7).

19. The device according to at least one of claims 1 to 18, **characterized in that**
at least the first or the second deflection unit is a mirror device returning the received light in parallel to the evaluation plane (16) in the direction of the respective camera device (4) in the return plane (17).

20. The device according to at least one of claims 6 to 19, **characterized in that**
parabolic reflectors and/or concavely shaped reflectors are provided instead of the lenses.

21. The device according to at least one of claims 1 to 20, **characterized in that** at least the first or the second deflection device (8, 9) is formed as a prism.

22. The device according to at least one of claims 1 to 21, **characterized in that** at least the first or the second camera device (4) is formed as a line camera and forms a telecentric lens together with at least the first or the second lens (3, 7).

23. The device according to at least one of claims 1 to 22, **characterized in that** at least the first or second deflection unit deflects the light twice by 90°.

24. The device according to at least one of claims 1 to 23, **characterized in that** the light in the return plane (17) has an angle due to the respective deflection unit, which corresponds to an aperture angle of a respective lens (5) of the at least first or second camera device (4).

25. The device according to at least one of claims 1 to 24, **characterized in that** the distance between the telecentric evaluation plane (16) and the non-telecentric return plane (17) is at least so large that the object flying through both planes (16, 17) flies only through one of the two planes (16, 17) during an integration period of a sensor (6) of the camera device (4).

26. A method for detecting a position of a moving object (20), in particular of a projectile or an arrow, comprising a device according to at least one of claims 1 to 25, wherein the evaluation device receives positional values from the first and the second camera devices (4), which correspond to x-axis values and y-axis values, and obtains a position therefrom in the x-direction and y-direction of the object (20) flying through the evaluation plane (16), and wherein for the plausibility check of the obtained position and for increasing the detection accuracy, respectively, positional values are also used that are obtained when the object flies through the return plane (17).

27. The method according to claim 26, **characterized in that** the obtained positional values are displayed on a visualization device.

28. The method according to claim 26 or 27, **characterized in that** the obtained positional values are coupled to information via an encoding device, which allows an association of the positional values to a corresponding device at a shooting range if a plurality of shooting ranges is provided.

29. The method according to at least one of claims 26 to 28, **characterized in that** by using the number of the images captured by the camera device (24) on which a shadow of the object can be recognized, a conclusion as to the velocity of the object is drawn, the velocity being used as a plausibility check of the detected signal.

## Revendications

1. Dispositif de relevé de la position d'un objet (20) traversant une surface d'évaluation, notamment d'un projectile ou d'une flèche, comprenant
au moins une source (1) lumineuse émettant une bande lumineuse, qui émet la lumière dans un plan (16) d'évaluation, et comprenant au moins une unité de déviation, qui dévie la lumière émise dans le plan (16) d'évaluation, de manière à ce qu'elle se trouve après la déviation dans un plan (17) de renvoi, la lumière étant envoyée du plan (17) de renvoi à au moins un dispositif (4) photographique et
un dispositif d'exploitation, qui exploite le signal du dispositif (4) photographique et émet une position de l'objet (20),
**caractérisé en ce que** le plan (17) de renvoi se trouve à une distance déterminée à l'avance du plan (16) d'évaluation.

2. Dispositif suivant la revendication 1, **caractérisé en ce que** l'unité de déviation est formée d'au moins un, de préférence de deux miroirs (23, 24) paraboliques, dont le rayon est de préférence f=r/2, f étant la distance focale de la lumière et r étant le rayon du miroir (23, 24) parabolique.

3. Dispositif suivant la revendication 1 ou 2, **caractérisé en ce que** les deux miroirs (23, 24) paraboliques sont orientés l'un par rapport à l'autre, de manière à ce que la lumière dans le plan (17) de renvoi s'étende parallèlement à la lumière dans le plan (16) d'évaluation et soit déviée sensiblement de 180° de manière décalée de la distance entre les plans (16, 17).

4. Dispositif suivant la revendication 1, **caractérisé en ce qu'**il est prévu au moins une lentille (3, 7), à travers laquelle passe la lumière émise par la source (1) lumineuse et l'unité de déviation est formée d'au moins un dispositif (8, 9) de déviation, qui est disposé derrière la lentille (3, 7) et qui dévie la lumière, de manière à ce qu'elle repasse dans la lentille (3, 7) la lumière après la lentille (3, 7) se trouvant dans le plan (17) de renvoi.

5. Dispositif suivant la revendication 1 à 4, **caractérisé en ce qu'**il est prévu une première source (1) lumineuse et une deuxième source lumineuse, les sources (1) lumineuses émettant la lumière d'une manière sensiblement orthogonale l'une par rapport à l'autre dans le plan (16) d'évaluation.

6. Dispositif suivant au moins l'une des revendications 1 à 5, **caractérisé en ce qu'**il est prévu une première et deuxième lentilles (3, 7), la lumière de la première source (1) lumineuse arrivant sur la première lentille (3, 7) et la lumière de la deuxième source lumineuse sur la deuxième lentille (7).

7. Dispositif suivant au moins l'une des revendications 1 à 6, **caractérisé en ce que** la lumière arrive après la première lentille (3) sur un premier dispositif (8, 9) de déviation et la lumière arrive après la deuxième lentille sur un deuxième dispositif de déviation.

8. Dispositif suivant au moins l'une des revendications 1 à 5, **caractérisé en ce qu'**il est prévu un premier et un deuxième miroirs (23, 24) paraboliques, la lumière de la première source (1) lumineuse arrivant sur le premier miroir (23) parabolique et la lumière de la deuxième source lumineuse arrivant sur le deuxième miroir (24) parabolique.

9. Dispositif suivant au moins l'une des revendications 1 à 5, **caractérisé en ce que** la lumière passe après le deuxième dispositif (8, 9) de déviation dans la première lentille (3, 7) et la lumière passe après le deuxième dispositif de déviation dans la deuxième lentille (7).

10. Dispositif suivant au moins l'une des revendications 1 à 5, **caractérisé en ce que** la lumière (20) après une première unité de déviation va à un premier dispositif (4) photographique et la lumière (20) après une deuxième unité de déviation va à un deuxième dispositif photographique.

11. Dispositif suivant au moins l'une des revendications 6 à 9, **caractérisé en ce que** la lumière (20) après le premier dispositif (8, 9) de déviation et après être passée dans la première lentille (3, 7), va à un premier dispositif (4) photographique et la lumière (20) après le deuxième dispositif de déviation et après être passée dans la deuxième lentille (7), va à un deuxième dispositif photographique.

12. Dispositif suivant au moins l'une des revendications 1 à 11, **caractérisé en ce que** la lumière envoyée au premier et au deuxième dispositifs (4) photographiques se trouve dans le plan (17) de renvoi.

13. Dispositif suivant au moins l'une des revendications 6 ou 12, **caractérisé en ce que** la lumière a, dans le plan (16) d'évaluation, un trajet des rayons parallèle.

14. Dispositif suivant au moins l'une des revendications 1 à 13, **caractérisé en ce qu'**au moins la première ou la deuxième source (1) lumineuses sont formées d'une pluralité de diodes (18) électroluminescentes.

15. Dispositif suivant au moins l'une des revendications 1 à 14, **caractérisé en ce que** la première et la deuxième sources (1) lumineuses comportent un moyen à lumière dispersée, qui répartit la lumière par dispersion et produit une bande lumineuse homogène dans le plan (16) d'évaluation.

16. Dispositif suivant la revendication 15, **caractérisé en ce que** le moyen à lumière dispersée est en verre opale et est intégré dans un barreau (19) transparent ou est prévu après le barreau (19) dans le trajet des rayons.

17. Dispositif suivant au moins l'une des revendications 1 à 16, **caractérisé en ce qu'**au moins la première ou la deuxième source (1) lumineuse émet de la lumière infrarouge.

18. Dispositif suivant au moins l'une des revendications 6 ou 7, **caractérisé en ce qu'**au moins la première ou la deuxième lentille (3, 7) est constituée sous la forme d'une lentille (3) cylindrique et/ou d'une lentille (7) de Fresnel.

19. Dispositif suivant au moins l'une des revendications 1 à 18, **caractérisé en ce qu'**au moins la première ou la deuxième unité de déviation est un dispositif à miroir, qui renvoie dans le plan (17) de renvoi la lumière reçue parallèlement au plan (16) d'évaluation en direction du dispositif (4) photographique respectif.

20. Dispositif suivant au moins l'une des revendications 6 à 19, **caractérisé en ce qu'**il est prévu des réflecteurs paraboliques et/ou des réflecteurs concaves au lieu des lentilles.

21. Dispositif suivant au moins l'une des revendications 1 à 20, **caractérisé en ce qu'**au moins le premier ou le deuxième dispositif (8, 9) de déviation est constitué sous la forme d'un prisme.

22. Dispositif suivant au moins l'une des revendications 1 à 21, **caractérisé en ce qu'**au moins le premier ou le deuxième dispositif (4) photographique est constitué sous la forme d'un appareil photographique à lignes et, ensemble avec au moins la première ou la deuxième lentille (3, 7), forme un objectif télécentré.

23. Dispositif suivant au moins l'une des revendications 1 à 22, **caractérisé en ce qu'**au moins la première ou la deuxième unité de déviation dévie la lumière deux fois de 90°.

24. Dispositif suivant au moins l'une des revendications 1 à 23, **caractérisé en ce que** la lumière a, dans le plan (17) de renvoi, par l'unité respective de déviation, un angle qui correspond à un angle d'ouverture d'un objectif (5) respectif du au moins un premier ou deuxième dispositif (4) photographique.

25. Dispositif suivant au moins l'une des revendications 1 à 24, **caractérisé en ce que** la distance entre le plan (16) d'évaluation télécentré et le plan (17) de renvoi non-télécentré est au moins si grande que l'objet traversant les deux plans (16, 17) ne traverse, pendant un temps d'intégration d'un capteur (6) du dispositif (4) photographique, que l'un des deux plans (16, 17).

26. Procédé de relevé de la position d'un objet (20) en déplacement, notamment d'un projectile ou d'une flèche, comprenant un dispositif suivant au moins l'une des revendications 1 à 25, dans lequel le dispositif d'évaluation reçoit du premier et du deuxième dispositifs (4) photographiques des valeurs de position, qui correspondent à des valeurs sur l'axe x et à des valeurs sur l'axe y et en détermine une position dans la direction x et dans la direction y de l'objet (1) traversant le plan (16) d'évaluation et, pour le contrôle de vraisemblance de la position déterminée ou pour l'augmentation de la précision du relevé, il est tiré partie aussi de valeurs de position, qui sont obtenues lorsque l'objet traverse le plan (17) de renvoi.

27. Procédé suivant la revendication 26, **caractérisé en ce que** les valeurs de position déterminées sont affichées sur un dispositif de visualisation.

28. Procédé suivant la revendication 26 ou 27, **caractérisé en ce que** les valeurs de position déterminées sont couplées par un dispositif de codage à des informations, qui permettent d'associer les valeurs de position à un dispositif correspondant sur un stand de tir lorsqu'il est prévu plusieurs stands de tir.

29. Procédé suivant l'une des revendications 26 à 28, **caractérisé en ce que**
au moyen du nombre des images détectées par le dispositif (4) photographique, sur lesquelles on peut reconnaître une silhouette de l'objet (20), on déduit une vitesse de l'objet (20), la vitesse étant utilisée comme contrôle de vraisemblance du signal relevé.

EP 1 892 495 B1

1

2

3

10

5

6

4

Fig 1

Fig 2

Fig 3

EP 1 892 495 B1

Fig. 3a

EP 1 892 495 B1

Fig 4

EP 1 892 495 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4415944 A1
- DE 1917138 A1
- DE 3132172 A1

- US 6717684 B1
- EP 0121840 A
- WO 9507471 A